# EUROPÄISCHE PATENTSCHRIFT

(11) **EP 0 763 418 B1**
(45) Veröffentlichungstag und Bekanntmachung des Hinweises auf die Patenterteilung: **29.06.2005**
(21) Anmeldenummer: 96112705.7
(22) Anmeldetag: 07.08.1996
(51) Int. Cl.: B32B 5/02, B32B 31/08, B32B 31/00, D04H 13/00, D04H 1/54, D04H 1/74

(54) **Verfahren zum Herstellen einer mehrlagigen Bahn insbesondere als Polsterbezugsmaterial für Fahrzeugsitze**
Method for producing a multilayered web for upholstery cover material for vehicles
Procédé de fabrication d'une bande multicouche pour matériaux de capitonnage pour véhicules

(30) Priorität: 18.09.1995 DE 19534252
(43) Veröffentlichungstag der Anmeldung: 19.03.1997
(73) Patentinhaber: Karl Mayer Malimo Textilmaschinenfabrik GmbH, 09117 Chemnitz (DE)
(72) Erfinder: Schmidt, Gunter, 71065 Sindelfingen (DE); Böttcher, Peter, Dr., 09122 Chemnitz (DE); Schmitz, Marcus, 41063 Mönchengladbach (DE)
(74) Vertreter: Knoblauch, Andreas, Dr.-Ing.

(56) Entgegenhaltungen:
- WO-A-93/23596
- DE-A- 4 129 188
- DE-U- 9 116 536
- GB-A- 2 239 215
- GB-A- 2 245 606
- US-A- 3 619 322
- G.F. SCHMIDT: "Kaschierung von Autopolsterstoffen mit Faservliesen" MELLIAND TEXTILBERICHTE, Bd. 6, 1992, Seiten 479-486, XP002118857 DE

## Beschreibung

Die Erfindung betrifft ein Verfahren zur Herstellung einer mehrlagigen Bahn aus einem außen liegenden Bezug und aus einem darunter liegenden voluminösen Vliestoff der mittels Faserverschlingungen vorverfestigt ist, der in seinem mittleren Bereich mindestens 20 %, vorzugsweise etwa 70 % Faserteile hat, die etwa rechtwinkelig zur Vliesoberfläche ausgerichtet sind, der einen Anteil Bindefasern aufweist und der mittels Klebstoff auf die Bahn des Bezuges kaschiert wird.

Bezugsmaterialien für Polstermöbel und insbesondere für Sitze in Fahrzeugen, aber auch bezogene, weich hinterfütterte Verkleidungsteile wie z. B. Türinnenverkleidungen sollen nicht nur aus Gründen einer besseren Handhabbarkeit beim Nähen der Bezüge, sondern auch für den späteren Gebrauch eine gewisse Eigensteifigkeit besitzen, weshalb man die Bezugsmaterialien mit Weichschaumlagen, in der Regel dünne PUR-Schaumbahnen kaschiert hat. Der so hinterfütterte Bezugsstoff fühlt sich nicht nur weicher als ein unmittelbar auf dem Unterpolster des Sitzes aufliegender Bezugsstoff an, sondern ein solcher Bezugsstoff behält auch nach längerer Gebrauchsdauer eine faltenfreie Form. Es ist in diesem Zusammenhang daran zu denken, dass insbesondere in Fahrzeugen die Personen u. U. mehrere Stunden ohne Unterbrechungen in einer im wesentlichen gleichen Sitzposition verharren. Damit die solcherart ausgesteiften Bezugsmaterialien auf ihrer Rückseite nicht anhängen, sondern gut gleiten, muss meist auch die Rückseite der ausgesteiften Bezugsmaterialien mit einem luftdurchlässigen, textilen Abschluss versehen sein. Meist wird auf die Schaumunterfütterung rückseitig noch eine leichte textile Bahn aufkaschiert. Es ist verständlich, dass derartige meist dreilagige Bezugsmaterialien recht teuer sind, zumal der eigentliche Polsterstoff alleine schon nicht billig ist. Deshalb hat man aus Ersparnisgründen als Weichstofflage die erwähnten, etwa 2 bis 8 mm starken Schaumstofflagen verwendet, die preisgünstiger sind als ein Vliesstoff, obwohl dieser die besseren Voraussetzungen für ein gutes Sitzklima schafft. Voraussetzung für die Verwendbarkeit eines Vliesstoffes bei der Unterfütterung von Polstermaterialien ist eine ausreichende Dauerelastizität; die Weichstofflage darf unter längerer Wärme-, Druck- und Feuchtigkeitseinwirkung sich nicht dauerhaft flachdrücken lassen, sondern muss zumindest nach einer gewissen Abkühlungs- und Trocknungszeit wieder annähernd auf die alte Höhe auffedern.

Es ist bekannt, unterschiedliche Bahnen, zu denen hier nicht nur Gewebe oder Gewirke, sondern auch die weiter unten erwähnten Vliesstoffe sowie Leder oder Kunststoffbahnen gerechnet werden sollen, also z. B. eine Gewebebahn einerseits und ein Vliesstoff andererseits zwischen Paaren von im Abstand parallel und geradlinig geführten, beiderseits geschlossenen, teilweise beheizbaren und teilweise kühlbaren Führungsbändern - in sog. Flachbettkaschiermaschinen - mittels Klebern zu verbinden.

Nach dieser Technik können auch die Schaumstoff-unterfütterten Bezugsstoffe kaschiert werden. Besonders in Anwendung ist aber das Flammkaschierverfahren, wo etwa 0,6 mm einer PUR-Schaumstofffolie abgeschmolzen werden und die noch flüssige Schmelze als Kleber verwendet wird.

Der Stand der Technik kennt unterschiedliche Arten von Klebern und Kleberauftragsverfahren für Bahnen sowie Trocken- und Aushärteverfahren. In diesem Zusammenhang sei beispielsweise zum einen das Auftragen eines aus feinen Einzelpunkten bestehenden Filmes von Schmelzkleber auf die eine, mit der anderen Bahn in Kontakt gelangende Oberfläche oder zum anderen das Auflegen eines dünnen Vlieses nur aus Bindefasern auf die eine Bahnseite oder das Einlaufen-lassen eines solchen Bindefaser-Vlieses zwischen die zu verklebenden Bahnen erwähnt. Verschiedene, in diesem Zusammenhang geeignete Vliesstoffarten, ihre Verwendbarkeit für Autopolsterstoffe und die Prüfmethoden sind u. a. in Beiträgen von G. Schmidt "Kaschierung von Autopolsterstoffen mit Faservliesen" in Melliand Textilberichte 6/1992, Seiten 479 bis 486 und "Abstandsgewirke ohne und mit Dekorseite für Anwendungen im Automobil" in Melliand Textilberichte 1/1993, Folgen 1 und 2, Seiten 37 bis 39 bzw. Seiten 129 bis 134 beschrieben. Auch das DE 91 16 536 U1 zeigt ein mehrlagiges, textiles Bezugsmaterial dieser Art. Danach haben also mehrlagige Bezugsmaterialien für Autopolsterstoffe, bei denen ein Oberstoff mit einem Vliesstoff in Form eines Vliesgewirkes zusammenkaschiert ist, als bekannt zu gelten.

Die im Melliand 6/92 beschriebenen Vliesgewirke besitzen in der Regel einen hohen Anteil von senkrecht zur Vliesstoffoberfläche ausgericheteten Fasern. Diese Fasern sind durch die Vorverfestigung auf einer Oberfäche des Vliesstoffes in dieser Lage fixiert. Der Vliesstoff an sich hat durch diese Vorverfestigung eine solche Stabilität, dass er transportfähig und handhabbar ist. Für das Kaschieren dieses Vliesstoffes mit dem Bezugsstoff werden Klebstoffe auf die unverfestigte Seite des Vliesstoffes aufgebracht. Nach dem Heranführen des Bezugsstoffes werden Vliesstoff und Bezugsstoff gemeinsam durch den Klemmspalt von Kalanderwalzen geführt und schließlich nach ihrer Entspannung zum Zwecke des Aushärtens gekühlt. Die vorverfestigte Seite des Vliesstoffes wird ohne weitere Behandlung als Gleitfläche des mehrschichtigen Polsterstoffes genutzt.

Diese Art der Herstellung einer mehrlagigen Bahn für Polsterzwecke hat mehrere Nachteile. Der Klebstoff verteilt sich beim Kaschieren ungleichmäßig im gesamten Vliestoff. Nach dem Entspannen und Kühlen richteten sich die senkrecht zur Vliesstoffoberfläche gerichteten Fasern nur unregelmäßig wieder auf. Die mehrlagige Bahn besitzt eine ungleichmäßige Dicke. Nachfolgende Kalibriervorgänge werden nicht beschrieben.

Eine solche Arbeitsweise ist im hohen Maße unwirtschaftlich und hinsichtlich der Qualität des Polsterbezugsstoffes unbefriedigend. Diese Arbeitsweise ist nicht geeignet, die Polsterung mittels Schaumstoff unter wirtschaftlichen und insbesondere unter qualitativen Gesichtspunkten abzulösen.

Mit dem DE 91 16 536 U1 wurde u. a. vorgeschlagen, der Faserschicht des Vliesstoffes mehr als 5 % Bindefasern unterzumischen. Dieser Bindefaseranteil sollte unter Erhaltung der Feuchtigkeits-Aufnahmefähigkeit eine höhere Dauerelastizität gewährleisten. Die Art der verwendeten Kaschiervorrichtung wird in diesem Dokument nicht angegeben.

Eine Art der Aktivierung von Bindefasern während eines Verfestigungsvorganges beschreibt die US 3,619,322. Dort wird der Vliesstoff, der Bindefasern enthält, bogenförmig über eine rotierende Siebtrommel gefördert. In diesem Führungsbereich wird heiße Luft durch den Vliestoff und die Siebtrommel geführt. Die Bindefasern schmelzen partiell auf und verbinden während einer nachfolgenden Abkühlung aneinander liegende Fasern. Durch dieses, meist als Thermofusion bezeichnete Verfestigungsverfahren wird der Vliesstoff in der Dicke deutlich reduziert und biege- und schubsteifer. Die Oberfläche ist weniger haftfreudig. Der Vliesstoff, der keine senkrecht zur Vliesstoffoberfläche ausgerichtete Fasern enthält, soll bei der weiteren Verarbeitung zu textilen Erzeugnissen leichter handhabbar sein.

Für den vorliegenden Zweck - nämlich eine elastische, mehrschichtige Bahn zu schaffen - ist diese Art der zusätzlichen Verfestigung des Vliesstoffes ungeeignet. Die heiße Luft erreicht alle Bindefasern des Vliesstoffes. Gleichzeitig werden alle Fasern des Vliesstoffes mit differenzierter Kraft auf den Umfang der Siebtrommel gepresst. Der Vliesstoff mit senkrecht angeordnten Fasern würde seine voluminöse, elastische Struktur verlieren. Er würde örtlich brettartig sowie unterschiedlich dick und wäre für Polsterbezüge nicht geeignet.

Eine anschließende Kalibrierring und Glättung ist weder beschrieben noch zweckmäßig. Evtl. verbliebene elastische Bereiche würden zusätzlich verfestigt und ihrer verbliebenen Elastizität beraubt.

Ein weiterer, entscheidender Nachteil besteht darin, dass sich der Werkstoff der aufgeschmolzenen Bindefasern auch auf der Siebtrommel absetzt. Diese Siebtrommein setzen sich zu und bedürfen einer häufigen Wartung. Das Verfahren ist kostenaufwendig und führt auch nicht zu dem gewünschten Ergebnis.

Neuerdings ist ein anderer Typ von Bindefasern bekannt geworden, nämlich eine sog. Bikomponenten-Bindefaser, bei der zwei thermoplastische Kunststoffe unterschiedlichen Schmelzpunktes, z. B. 140 °C und 220 °C, in konzentrischer Anordnung mit dem niedriger schmelzenden Kunststoff außenliegend, zu einer einzigen Faser verarbeitet sind. Auch die Verwendung dieser Bindefasern führt in dem eben beschriebenen Verfahren nicht zu einem besseren Ergebnis.

Die DE 41 29 188 A1 zeigt eine Anlage zur Herstellung eines mehrlagigen Vliesstoffes mit einer Spinnvlieslage im Kern aus Polymerfasern und wenigstens einer aufkaschierten Decklage aus warmfesten Fasern, insbesondere aus Glasfasern. Der mehrlagige Vliesstoff dient als Vormaterial für Dachdeckungsbahnen hoher Festigkeit, die zu einem späteren Zeitpunkt noch bitumisiert werden müssen.

Die ausschließlich flach abgelegte Faserschicht wird beiderseits mit ebenso flach abgelegten Bindefasern belegt und in einem zweistufigen Prozess unter Druck, der nicht auf einen bestimmten Abstand begrenzt ist, und bei hoher Temperatur verfestigt. Als Wärmeträger fungiert heiße Luft, die den Umfang einer Siebtrommel und den Vliesstoff durchströmt.
Das auf diese Weise entstehende Flächengebilde ist steif und unelastisch. Es ist für eine Unterfütterung von Sitzpolstern nicht geeignet.

Ausgehend von dem geschilderten Stand der Technik ist es Aufgabe der Erfindung, ein kostengünstiges Verfahren zur Herstellung mehrlagiger, elastischer, flexibler Bahnen hoher Dickengleichmäßigkeit und glatter Abseite unter Verwendung voluminöser Vliesstoffe mit einem hohen Anteil senkrecht zur Vliesstoffoberfläche ausgerichteter Fasern und mit einem Anteil von Bindefasern vorzuschlagen. Das gefundene Verfahren soll die Verwendung von Reißfasern nicht ausschließen, so dass ein erhebliches Einsparpotential erschlossen werden kann.

Diese Aufgabe wird durch die Merkmale des Anspruches 1 gelöst. Unter Verwendung der bekannten voluminösen, vorverfestigten Vliesstoffe, in die Bindefasern gleichmäßig verteilt eingearbeitet sind, wird der Verfestigungsvorgang, der Kalibrierungsvorgang und das Glätten der Oberflächen des Vliesstoffes ohne Beeinträchtigung der Elastizität des Vliesstoffes in einem einzigen Schritt ausgeführt. Die Verwendung geschlossener, glatter, heizbarer und kühlbarer Förderbänder, die zudem geradlinig und annähernd parallel zueinander und kalibrierungswirksam geführt werden, in einer Flachbettkaschiermaschine garantiert zudem einen hohen Grad an Elastizität, eine gleichmäßige Dicke und eine gleitfähige Oberfläche des Vliesstoffes. Dieses Verfahren gestattet den Einsatz von Reißfasern und erspart dadurch die mehrstufige Bereitstellung der Ausgangsstoffe für die Vliestoffe an sich, nämlich die Kunststoffherstellung und die Faserherstellung.

Die kostenneutrale Substitution der bisher verwendeten, sitzklimatisch nicht optimalen Schaumstofflagen ist mit diesem Verfahren möglich. Das nach dem erfindungsgemäßen Verfahren hergestellte Bezugsmaterial ist wesentlich einfacher und besser recycelbar.

Das anschließende Kaschieren des Bezuges nach Anspruch 2 beeinträchtigt die nach Anspruch 1 gewonnenen Eigenschaften nicht.

Führt man gemäß Anspruch 3 den Bezugsstoff gemeinsam mit dem vorverfestigten Vliesstoff unter Anwesenheit von Klebstoff in die Flachbettkaschiermachine, kann man auch den Kaschierprozess unter den definierten Bedingungen in der Flachbettkaschiermaschine gleichzeitig mit den vorn genannten Vorgängen ohne Qualitätseinbußen realisieren.

Mit der Anordnung des vorverfestigten Vliesstoffes in der mehrlagigen Bahn nach Anspruch 4 wird eine hohe Flexibilität der mehrlagigen Bahn erreicht, die bei der Verarbeitung zu Polsterstoffen weniger zu Fa!tenbildung neigt.

Die Zusammenstellung der mehrlagigen Bahn nach Anspruch 5 führt in der Summe zu einer weicheren Oberfläche. Dieser Stoff eignet sich vorzugsweise für ebene Sitzflächen mit geringer Krümmung im Bereich der Nähte.

Die übrigen Ansprüche definieren die Verwendung der unterschiedlichen vorverfestigten Vliesstoffe und besonders vorteilhafte Arbeitsbedingungen.

Im Sinn der vorliegenden Erfindung soll unter dem Begriff "Bezug" die textile oder nichttextile Oberseite von Polster- oder Abdeckverbunden insbesondere im Bereich der Innenausstattung von Fahrzeugen jeglicher Art und im Wohnbereich verstanden werden. Dieser Bezug ist im stofflichem Sinn entweder ein Textil, z. B. ein Gewebe, Maschenstoff o. dgl. oder ein nichttextiles, flächiges Material wie z. B. Leder, Kunstleder, Folie, beschichtete Textilie o. ä. Dieser Bezug kann in seiner Aufmachung für die Zwecke der vorliegenden Erfindung als Bahn, Rolle oder als fächenbegrenztes Teil, z. B. als eine zugerichtete Tierhaut oder als ein textiles Zuschnittteil für einen Sitz eingesetzt werden.

Unter dem hier mehrfach verwendeten Begriff "Vliesstoff" soll eine flächige Faser- oder Filamentanordnung verstanden sein, bei der die Fasern oder Filamente - im Gegensatz zum bloßen, lockeren Vlies - durch mechanische (z.B. durch Vlieswirken oder Nadeln), chemische (z. B. durch faserbenetzende Kleber) und/oder thermische Verfahren (z. B. durch Anschmelzen von Bikomponentenfasern) zu einem zusammenhaltenden Flächengebilde verfestigt sind. Diese Verfestigung des Vlieses ist aus Gründen seiner Handhabbarkeit erforderlich. Sie ist im Zusammenhang mit der vorliegenden Erfindung lediglich als eine Vorverfestigung zu verstehen, weil vorliegend der Vliesstoff durch die Erfindung über die übliche Vliesverfestigung hinaus zusätzlich dadurch verfestigt wird, dass er durch Einlagern und Aktivieren von Bikomponenten-Bindefasern in das Vlies höhere textilphysikalische Druck- und Elastizitätswerte ähnlich denen von Schaumstoff erhält. Im Nomalfall eines Vliesstoffes wäre eine solche zusätzliche Verfestigung aus Kostengründen nicht vertretbar. Vorliegend wird jedoch dieser zusätzliche Verfestigungsschritt harmonisch und kostengünstig mit dem ohnehin erforderlichen Schritt des Kaschierens vereinigt.

In zweckmäßigen Ausgestaltungen der Erfindung können folgende bekannte textile Bahnen mit hohem, stehenden Faseranteil eingesetzt werden, wobei die den nachfolgenden Definitionen vorangestellten, im deutschen Fachschrifttum gebräuchlichen Bezeichnungen u. U. geschützte Handelsbezeichnungen der jeweiligen Herstellerfirmen sein können:
> Dilourisiertes Nadelvlies: Bei diesem Nadelvliesstoff besteht die Oberseite, die im späteren Verbund in der Regel dem Bezugsstoff zugekehrt liegt, aus - velourartig - vertikal vom Nadelvlies abstehenden Polfasern. Die Unterseite dieses textilen "Schichtstoffes" ist durch eine flächige Wirrfaserlage mittlerer Fasereinbindung gebildet. Die Dicke der Polfaserschicht beträgt etwa 2 bis 6 mm und der Anteil der vertikal angeordneten Polfasern an den Gesamtfasern des dilourisierten Nadelvlieses liegt bei 15 bis 40 %. Ausgehend von einem voluminösen, querorientierten Faservlies wird dieses zunächst durch Durchstechen von Widerhakennadeln mechanisch verfestigt. Anschließend werden durch Durchstechen von Spezialnadeln Faseranteile aus dem Vlies nach einer Seite herausgestoßen und auf der entsprechenden Seite als vertikaler Faserpol ausgebildet.
> Dilourisiertes Vlies-Nähgewirke, auch Malivlies genannt: Voluminöser Vliesstoff, dessen Oberseite aus vertikal abstehenden Polfasern und dessen Unterseite größtenteils aus Fasermaschen besteht, wobei die Dicke der Polfaserschicht je nach Art 1 bis 5 mm betragen und der Polfaseranteil etwa 10 bis 50 % ausmachen kann. Auch hier wird von einem querorientierten Faservlies ausgegangen. Aus dem Vlies werden zunächst Faseranteile zu Fasermaschen geformt. Anschließend werden andere Faseranteile durch durchstechende Spezialnadeln aus dem Querschnitt des Vlieses einseitig herausgestoßen und dort ein vertikaler Faserpol auf der entspechenden Vliesseite gebildet.
> Kunit-Vliesgewirke: Volumiöser Vliesstoff, dessen Oberseite aus vertikalen Faserpolfalten und dessen Unterseite ausschließlich aus Fasermaschen besteht. Die geeigneten Dicken liegen zwischen 2 und 14 mm; der Anteil der vertikal angeordneten Fasern in Bezug auf die Gesamtfasern liegt bei 30 bis 80 %. Bei der Herstellung von Kunit-Vliesgewirke geht man von einem dünnen, längsorientierten Faserflor aus, der zunächst mäanderförmig plissiert wird und bei dem die gebildeten Florfalten horizontal verdichtet werden. Stabilisiert wird dieses Gebilde, indem aus der dichten Schar von Florbugfalten der einen Seite flächendeckend vliesintegrierte Fasermaschen gebildet und ineinander verschlungen werden.
> Multiknit-Vliesgewirke: Voluminöser Vliesstoff, dessen Ober- und Unterseite vollkommen aus Fasermaschen bestehen. Die zwischen den Fasermaschenoberflächen gebildete Faserschicht enthält vorwiegend Fasern mit vertikaler Orientierung. Geeignete Dicken liegen zwischen 4 und 10 mm; der Anteil der Vertikalfasern - bezogen auf die Gesamtfasermenge - beträgt 30 bis 60 %. Bei der Herstellung dieses Vliesgewirkes geht man aus von einem oben beschriebenen Kunit-Vliesgewirke, bei dem auch auf der anderen Seite aus den Faserpolfalten flächendeckend Fasermaschen gebildet werden.
> KSB-Vliesgewirke: Voluminöser Vliesstoff, dessen Ober- und Unterseite vollkommen aus Fasermaschen bestehen und bei dem zwischen beiden Fasermaschenoberflächen zwei Faserschichten mit vorwiegend vertikaler Faserorientierung und eine mittig liegende, horizontal angeordnete, verbindend wirkende Fasermaschenschicht vorgesehen sind. Herstellbare Dicken: 6 bis 24 mm; vertikaler Faseranteil etwa 20 bis 50 % von der gesamten Fasermenge. Ausgangsmaterial für dieses Vliesgewirke sind zwei Lagen von Kunit-Vliesgewirken, die spiegelbildlich mit den maschenfreien Seiten einander zugekehrt aufeinander gelegt werden. Die beiden Lagen werden dadurch miteinander verbunden, indem aus den einander zugekehrten Faserpolfaltenreihen beider Lagen Faseranteile herausgezogen und zu Fasermaschen geschlagen werden.
> Thermofusions-Vliesstoff Struto: Voluminöser Vliesstoff, der an beiden Vliesaußenseiten eine dichte Folge von parallelen, zeilenartig angeordenten Florbugfalten aufweist und in der Mittelschicht aus einer Vielzahl vertikal dicht nebeneinander stehender Abschnitte eines dünnen Flors mit Faserwirrlage besteht. Herstellbare Dicken: 10 bis 40 mm; vertikaler Faseranteil 30 bis 80 %. Bei der Herstellung von Thermofusions-Vliesstoff Struto geht man von einem längsorientierten Faserflor mit einem Bindefaseranteil aus. Der dünne Faserflor wird mäanderförmig plissiert und die gelegten, vertikal stehenden Florfalten werden horizontal verdichtet. Anschließend wird dieses Gebilde in einem Ofen durch die Bindefasern, d. h. durch Termofusionieren stabilisiert.

In einem Vergleich der Erfindung mit dem Stand der Technik wurde ein erfindungsgemäß hergestellter, textiler Mehrlagenverbund, bei dem die Stützlage aus einem Kunit-Vliesgewirke gebildet ist, einem funktionsgleichen herkömmlichen Bezugsmaterial mit einkaschierter PUR-Schaumstoffiage und rückseitigem Gewirke gegenübergestellt. Und zwar wurden zwei unterschiedliche Kunit-Vliesgewirke ausgewählt, deren Daten in der weiter unten aufgeführten tabellarischen Übersicht ebenso enthalten sind wie die Vergleichsdaten des herkömmlichen Bezugsmaterials PUR-Schaumstofflage. Die Daten lassen erkennen, dass die in Vergleich gesetzten Bezugsmaterialien bezüglich der textilphysikalischen Prüfwerte sehr ähnliche Resultate ergaben, was aufgrund geeigneter Auswahl der rein textil aufgebauten Bezugsmaterialien beabsichtigt war. Dazu war es erforderlich, einen Kunit-Vliesstoff mit einer etwas erhöhten Masse, d. h. einem etwas höheren Raumgewicht auszuwählen. Als PUR-Schaumstofflage wurde zum Vergleich ein Typ mit Raumgewicht 40 und der Stauchhärte 4,3 eingesetzt und ein Abseitengewirke von 55 g/mm² verwendet. Bei den beiden Kunit-Varianten wurden 55 % PES-Bikomponenten-Bindefasern 9,9 dtex/60 mm eingesetzt. Das einheitliche erfindungsgemäße Kaschier- und Kalibrierverfahren wurde bei 195 °C durchgeführt. Die erzielten Prüfergebnisse sind folgende:

| | Probe 1 mit PUR-Schaum u. Gewirke | Probe 2 mit Kunit a | Probe 3 mit Kunit b |
|---|---|---|---|
| Raumgewicht [kg/m³] | 60 | 70 | 80 |
| Stauchhärte [kPa] | 4,6 | 3,6 | 6,0 |
| Druckel. Verh.a_{30-5H} | 28 | 39 | 42 |
| [%] a_{30-5E₃} | 96 | 93 | 92 |
| Erholungsfäh. längs | 96 | 84 | 82 |
| quer | 93 | 90 | 88 |
| Bleib.Verform. trocken | 8 | 18,5 | 16,5 |
| [%] nass | 19 | 20,5 | 16,5 |
| Brennprüfung längs | A | A | A |
| quer | A | A | A |

Bei dem durch Thermofusionieren zusatzverfestigten Kunit-Vliesgewirke kann die Stauchhärte über das Raumgewicht, d. h. die Dicke gesteuert werden. Das Kunit-Vliesgewirke lässt sich etwa 12 % weniger stark zusammendrücken und seine Erholungsfähigkeit ist ganz geringfügig schwächer. Bei der bleibenden Verformung sind die Werte für die trockene Probe bei 70 °C beim PUR-Schaum etwas günstiger, wogegen im nassen, heißen Zustand - entsprechend einem feucht-warmen Sitzklima - kein Unterschied besteht. Bezüglich der Brennprüfung (SMVSS 302) werden die überall vorliegenden besten Werte bei Kunit-PES-Vliesstoff auch ohne Flammschutzmittel erzielt, die bei serienmäßig in Anwendung befindlichen Bezugsmaterialien mit PUR-Schaum üblich sind. Zusammenfassend lässt sich also sagen, dass der Unterbau mit zusätzlich durch Thermofusion verfestigtem Kunit-Vliesgewirke bezüglich der textilphysikalischen Werte an den Stand der Technik bei Bezugsmaterialien mit PUR-Schaum und Gewirkeabseite anschließt. Berücksichtigt man dazu noch die Vorteile eines verbesserten Sitzklimas aufgrund des ausschließlichen Fasereinsatzes, einer besseren Hydrolysebeständigkeit der PES-Fasern gegenüber der von PUR-Schaum und einer besseren Recyclingfähigkeit aufgrund eines stofflich homogeneren Aufbaues des Mehrlagen-Verbundes, so ergibt sich bei vergleichbaren Gesamtkosten der in Vergleich gesetzten Bezugsmaterialien ein klarer Vorteil zugunsten des erfindungsgemäß herstellbaren, textilen Mehrlagenverbundes.

Üblich sind Kaschierungen, bei denen der Vliesstoff so in den Mehrlagenverbund eingebracht ist, dass die Maschen- bzw. Nadelseite des Vliesstoffes die Rückseite des Mehrlagenverbundes bildet. Diese Lage des Vliesstoffes hat den Vorteil, dass der Oberstoff weich abgestützt wird, dass die Rückseite nicht so leicht abflust und dass sie ein Gewirke-ähnliches Aussehen hat. Nachteilig bei manchen Anwendungen ist eine gewisse sandwichartige Steifheit des Mehrlagenverbundes, die bei engen Krümmungen des Bezugsmateriales zu einer unerwünschten Faltenbildung führen kann. Deshalb kann es im Einzelfall durchaus zweckmäßig sein, wenn man den Vliesstoff mit seiner Maschen- bzw. Nadelseite mit dem Oberstoff zusammenkaschiert, so dass die offenere Florseite die Rückseite des Mehrlagenverbundes bildet. Diese Art der Kaschierung hat den Vorteil, dass der Verbund biegeweicher ist und bei einer enggekrümmten Verarbeitung weniger Falten bildet. Auch wird der Oberstoff dadurch wirksamer ausgesteift, da die stabilere Seite des Vliesstoffes unmittelbar mit dem Oberstoff zusammenkaschiert ist. Nachteilig kann sich hier jedoch auswirken, dass der Oberstoff sich etwas härter anfühlt und dass die Rückseite des Mehrlagenverbundes u. U. leichter abflust.

## Patentansprüche

1. Verfahren zur Herstellung einer mehrlagigen Bahn
aus einem außen liegenden Bezug und
aus einem darunter liegenden voluminösen Vliestoff
der mittels Faserverschlingungen vorverfestigt ist,
der mindestens 20%, vorzugsweise etwa 70% Faserteile hat, die etwa rechtwinkelig zur Vliesoberfläche ausgerichtet sind,
der einen Anteil Bindefasern aufweist und
der mittels Klebstoff auf die Bahn des Bezuges kaschiert wird,
**dadurch gekennzeichnet,**
**dass** der vorverfestigte Vliesstoff in einer Flachbett-Kaschiermaschine zwischen annähernd planparallel, geradlinig und in einem kalibrierungswirksamen Abstand geführten und beiderseits geschlossenen Führungsbändern unter zunehmendem, flächig aufgebrachtem Druck fortlaufend gefördert wird, und
**dass** die beiderseits geschlossenen Führungsbänder der Flachbett-Kaschiermaschine teilweise erhitzt und teilweise gekühlt werden, so dass der Vliesstoff
- unter Anwesenheit von äußerlich schmelzenden, in den Vliesstoff eingelagerten Bikomponenten-Bindefasern mit einem Anteil zwischen 5 und 30 Gew.-%, vorzugsweise 15 Gew.-%,
- mit den beheizten Führungsbändern,
- in einem einzigen Arbeitsgang kalibrierend verdichtet und dabei thermisch zusätzlich verfestigt wird sowie die Vliesstoffoberflächen geglättet werden.

2. Verfahren nach Anspruch 1, **dadurch gekennzeichnet,**
**dass** der zusätzlich kalibriert verfestigte, elastische und geglättete voluminöse Vliesstoff unter Anwesenheit von Klebstoff an den Bezug herangeführt und kaschiert wird.

3. Verfahren nach Anspruch 1 **dadurch gekennzeichnet,**
**dass** der ausschließlich vorverfestigten Vliesstoff unter Anwesenheit von Klebstoff vor der Flachbettkaschiermaschine an die Bahn des Bezuges heran und beide gemeinsam zwischen die Führungsbänder hineingeführt werden, so dass die Vorgänge des kalibrierenden Verdichtens, des thermischen Verfestigens, des Glättens der freiliegenden Vliesstoffoberfläche und des Kaschierens an dem Bezug in einem einzigen Arbeitsgang ausgeführt werden.

4. Verfahren nach Anspruch 1, **dadurch gekennzeichnet,**
**dass** der vorverfestigte Vliestoff ein mindestens einseitig mittels Maschenverbund vorverfestigter Vliesstoff ist, der mit seiner vorverfestigten Vliesstoffoberfläche an den Bezug kaschiert wird.

5. Verfahren nach Anspruch 1, **dadurch gekennzeichnet,**
**dass** der vorverfestigte Vliestoff ein mindestens einseitig mittels Maschenverbund vorverfestigter Vliesstoff ist, der mit seiner velourartigen Stehfaserseite mit dem außenliegenden Bezug zusammenkaschiert wird.

6. Verfahren nach Anspruch 1, **dadurch gekennzeichnet,**
**dass** als voluminöser Vliesstoff ein dilourisierter Nadelvliesstoff verwendet wird.

7. Verfahren nach Anspruch 1, **dadurch gekennzeichnet,**
**dass** als voluminöser Vliesstoff ein dilourisierters Vlies-Nähgewirke, auch Malivlies genannt, verwendet wird.

8. Verfahren nach Anspruch 1, **dadurch gekennzeichnet,**
**dass** als voluminöser Vliesstoff ein Kunit-Vliesgewirke verwendet wird.

9. Verfahren nach Anspruch 1, **dadurch gekennzeichnet,**
**dass** als voluminöser Vliesstoff ein Multiknit-Vliesgewirke verwendet wird.

10. Verfahren nach Anspruch 1, **dadurch gekennzeichnet,**
**dass** als voluminöser Vliesstoff ein KSB-Vliesgewirke verwendet wird.

11. Verfahren nach Anspruch 1, **dadurch gekennzeichnet,**
**dass** als voluminöser Vliesstoff ein leicht vorverfestigter Thermofusions-Vliesstoff Struto verwendet wird.

12. Verfahren nach Anspruch 1, **dadurch gekennzeichnet,**
**dass** Bikomponenten-Bindefasern mit einem Fasertiter von etwa 10 dtex und einer Faserlänge von durchschnittlich 60 mm verwendet werden.

13. Verfahren nach Anspruch 1, **dadurch gekennzeichnet,**
**dass** in den voluminösen Vliesstoff ein Anteil von 50 bis 60 Gew.-%, vorzugsweise von etwa 55 Gew.-% an PES-Fasern mit einem Fasertiter von etwa 7 dtex und einer Faserlänge von durchschnittlich 75 mm und ein Anteil von 25 bis 35 Gew.-%, vorzugsweise von etwa 30 Gew.-% an PES-Fasern mit einem Fasertiter von etwa 11 dtex und einer Faserlänge von durchschnittlich 60 mm eingemischt wird.

14. Verfahren nach Anspruch 1, **dadurch gekennzeichnet,**
**dass** in den voluminösen Vliesstoff ein Faseranteil von feinen Fasern mit einem Titer von etwa 1,7 dtex und ein Anteil an Bikomponenten-Bindefasern mit einem Fasertiter von etwa 2,2 dtex eingemischt wird.

15. Verfahren nach Anspruch 1, **dadurch gekennzeichnet,**
**dass** in den voluminösen Vliesstoff ein Anteil von 30 bis 90 Gew.-%, vorzugsweise von etwa 60 Gew.-% an Reißfasern, insbesondere Reißwolle eingemischt wird.

16. Verfahren nach Anspruch 1, **dadurch gekennzeichnet,**
**dass** beim Zusatzverfestigen, Verdichten, Glätten, Kalibrieren und Kaschieren die beiden Bahnen bzw. der Vliesstoff bei einer Temperatur von 180 bis 205 °C, vorzugsweise bei etwa 195 °C zusammengedrückt werden.

17. Verfahren nach Anspruch 1, 2 oder 3, **dadurch gekennzeichnet,**
**dass** beim Zusatzverfestigen, Verdichten, Glätten, Kalibrieren und Kaschieren die beiden Bahnen von der Vliesseite her auf eine Temperatur von 180 bis 205°C, vorzugsweise von etwa 195 °C und von der Bezugsseite her auf eine Temperatur von 90 bis 150°C, vorzugsweise von etwa 140 °C aufgeheizt und in diesem Zustand zusammengedrückt werden.

18. Verfahren nach Anspruch 1, **dadurch gekennzeichnet,**
**dass** zum Kaschieren ein Schmelzkleber in Form eines flächendeckenden Punkterasters feiner Kleberpunkte auf die eine, mit der anderen Bahn in Kontakt gelangende Oberfläche aufgetragen wird.

19. Verfahren nach Anspruch 1, **dadurch gekennzeichnet,**
**dass** zum Kaschieren der Kleber in Form eines dünnen nur aus Bindefasern bestehenden Vlieses auf die eine Bahnseite aufgelegt und dieses Bindefaser-Vlies zwischen die zu verkiebenen den Bahnen einlaufen gelassen wird.

20. Verfahren nach Anspruch 1, **dadurch gekennzeichnet,**
**dass** das thermische Zusatzverfestigen, Verdichten, Glätten, Kalibrieren und Kaschieren des voluminösen Vliesstoffes und des Bezugsmaterials in teilkonfektionerten Zuschnitten der Bahnen erfolgt.

21. Verfahren nach Anspruch 1, 2 oder 3, **dadurch gekennzeichnet,**
**dass** das Zusammenkaschieren des kalibrierten und thermisch zusatzverfestigten, voluminösen Vliesstoffes mit dem Bezugsstoff in einer maschinenbaulich und verfahrensmäßig einheitlichen Abfolge mit dem Herstellen des voluminösen Vliesstoffes sowie dem Kalibrieren, G!ätten und thermischen Zusatzverfestigen des Vliesstoffes zusammengefasst wird.

## Claims

1. Process for producing a multi-layer web from an outer-lying cover and from a voluminous nonwoven material lying underneath, which is pre-consolidated by means of fibre intertwining, which has at least 20 %, preferably about 70% of fibre parts, which are aligned approximately at right angles to the surface of the nonwoven, which has a proportion of binding fibres and which is laminated by means of adhesive onto the web of the cover, **characterised in that** the pre-consolidated nonwoven material is conveyed continuously in a flat-bed laminating machine between approximately plane-parallel, straight-line guide belts guided at a calibration-effective distance and closed on both sides under increasing pressure applied two-dimensionally, and **in that** the guide belts of the flat-bed laminating machine closed on both sides are partly heated and partly cooled, so that the nonwoven material
- in the presence of externally melting bicomponent binding fibres incorporated in the nonwoven material and having a proportion between 5 and 30 wt.%, preferably 15 wt.%,
- using the heated guide belts,
- is compressed in calibrating manner in a single working step and thus additionally thermally consolidated and the nonwoven material surfaces are smoothed.

2. Process according to claim 1, **characterised in** the additionally calibrated consolidated, resilient and smoothed voluminous nonwoven material in the presence of adhesive is led onto the cover and laminated.

3. Process according to claim 1, **characterised in that** the only pre-consolidated nonwoven material in the presence of adhesive upstream of the flat-bed laminating machine is led onto the web of the cover and both together are introduced between the guide belts, so that the processes of calibrating compression, of thermal consolidation, of smoothing the exposed nonwoven material surface and of laminating are executed on the cover in a single working step.

4. Process according to claim 1, **characterised in that** the pre-consolidated nonwoven material is a nonwoven material pre-consolidated at least on one side by means of loop bonding, and is laminated to the cover by its pre-consolidated nonwoven material surface.

5. Process according to claim 1, **characterised in that** the pre-consolidated nonwoven material is a nonwoven material pre-consolidated at least on one side by means of loop bonding, and is laminated together with the outer-lying cover by its velour-like vertical fibre side.

6. Process according to claim 1, **characterised in that** a dilourised needled nonwoven material is used as the voluminous nonwoven material.

7. Process according to claim 1, **characterised in that** a dilourised nonwoven sewn knitted fabric, also called mali nonwoven, is used as the voluminous nonwoven material.

8. Process according to claim 1, **characterised in that** a Kunit nonwoven knitted fabric is used as the voluminous nonwoven material.

9. Process according to claim 1, **characterised in that** a multi-knit nonwoven knitted fabric is used as the voluminous nonwoven material.

10. Process according to claim 1, **characterised in that** a KSB nonwoven knitted fabric is used as the voluminous nonwoven material.

11. Process according to claim 1, **characterised in that** a slightly pre-consolidated thermofusion nonwoven material Struto is used as the voluminous nonwoven material.

12. Process according to claim 1, **characterised in that** bicomponent binding fibres having a fibre titre of about 10 dtex and a fibre length of on average 60 mm are used.

13. Process according to claim 1, **characterised in that** a proportion of 50 to 60 wt.%, preferably of about 55 wt.%, of PES fibres having a fibre titre of about 7 dtex and a fibre length of on average 75 mm and a proportion of 25 to 35 wt.%, preferably of about 30 wt.%, of PES fibres having a fibre titre of about 11 dtex and a fibre length of on average 60 mm is mixed into the voluminous nonwoven material.

14. Process according to claim 1, **characterised in that** a fibre portion of fine fibres having a titre of about 1.7 dtex and a proportion of bicomponent binding fibres having a fibre titre of about 2.2 dtex is mixed into the voluminous nonwoven material.

15. Process according to claim 1, **characterised in that** a proportion of 30 to 90 wt.%, preferably of about 60 wt.%, of reclaimed fibres, in particular reclaimed wool, is mixed into the voluminous nonwoven material.

16. Process according to claim 1, **characterised in that** during additional consolidation, compression, smoothing, calibration and lamination, the two webs or the nonwoven material are pressed together at a temperature of 180 to 205°C, preferably at about 195°C.

17. Process according to claim 1, 2 or 3, **characterised in that** during additional consolidation, compression, smoothing, calibration and lamination, the two webs are heated from the nonwoven side to a temperature of 180 to 205°C, preferably of about 195°C, and from the cover side to a temperature of 90 to 150°C, preferably of about 140°C and pressed together in this state.

18. Process according to claim 1, **characterised in that** for lamination, a melt adhesive in the form of a surface-covering point grid of fine adhesive points is applied to the one surface coming into contact with the other web.

19. Process according to claim 1, **characterised in that** for lamination, the adhesive is placed onto the one web side in the form of a thin nonwoven only consisting of binding fibres and this binding fibre nonwoven is allowed to run between the webs to be adhered.

20. Process according to claim 1, **characterised in that** the thermal additional consolidation, compression, smoothing, calibration and lamination of the voluminous nonwoven material and of the cover material takes place in partly ready-made blanks of the webs.

21. Process according to claim 1, 2 or 3, **characterised in that** laminating together of the calibrated and thermally additionally consolidated, voluminous nonwoven material with the cover material in a uniform sequence in terms of machine construction and the process is combined with the production of the voluminous nonwoven material and calibration, smoothing and thermal additional consolidation of the nonwoven material.

## Revendications

1. Procédé de fabrication d'une bande multicouches
constituée d'un revêtement situé à l'extérieur et
d'un non-tissé volumineux situé en dessous
qui est pré-consolidé au moyen d'enchevêtrements de fibres,
qui a au moins 20 %, de préférence environ 70 % de parties fibreuses qui sont orientées approximativement à angle droit par rapport à la surface du non-tissé,
qui présente une fraction de fibres de liaison et
qui est laminé sur la bande du revêtement au moyen de colle,
**caractérisé en ce que**
le non-tissé pré-consolidé est acheminé en continu dans une machine à laminer à lit plat entre des rubans de guidage approximativement planes et parallèles, rectilignes, guidés à une distance efficace pour le calibrage et fermés des deux côtés, sous une pression croissante appliquée sur toute la surface
et **en ce que**
les rubans de guidage fermés des deux côtés de la machine à laminer à lit plat sont partiellement chauffés et partiellement refroidis de sorte que le non-tissé
- en présence de fibres de liaison à deux composants, incorporées dans le non-tissé et fondant de l'extérieur, comportant une fraction comprise entre 5 et 30 % en poids, de préférence de 15 % en poids,
- avec les rubans de guidage chauffés,
- soit comprimé avec calibrage dans une même opération tout en étant en plus consolidé thermiquement et les surfaces du non-tissé lissées.

2. Procédé selon la revendication 1, **caractérisé en ce que**
le non-tissé volumineux élastique, lissé et en plus consolidé avec calibrage est acheminé vers le revêtement, en présence de colle, et laminé.

3. Procédé selon la revendication 1, **caractérisé en ce que**
le non-tissé, exclusivement pré-consolidé, est acheminé vers la bande de revêtement en présence de colle avant la machine à laminer à lit plat et les deux sont introduits ensemble entre les bandes de guidage de sorte que les opérations de compression calibrante, de consolidation thermique, de lissage de la surface dégagée du non-tissé et de laminage contre le revêtement peuvent être réalisées en une seule opération.

4. Procédé selon la revendication 1, **caractérisé en ce que**
le non-tissé pré-consolidé est un non-tissé pré-consolidé au moins sur un côté au moyen d'un réseau de mailles, qui est laminé au revêtement avec sa surface pré-consolidée.

5. Procédé selon la revendication 1, **caractérisé en ce que**
le non-tissé pré-consolidé est un non-tissé pré-consolidé au moins sur un côté au moyen d'un réseau de mailles, qui est laminé au revêtement situé à l'extérieur avec son côté de fibres dressées de type velours.

6. Procédé selon la revendication 1, **caractérisé en ce qu'**
on utilise un non-tissé aiguilleté en louisine en tant que non-tissé volumineux.

7. Procédé selon la revendication 1, **caractérisé en ce qu'**
on utilise un cousu-tricoté non tissé en louisine en tant que non-tissé volumineux.

8. Procédé selon la revendication 1, **caractérisé en ce qu'**
on utilise un non-tissé Kunit en tant que non-tissé volumineux.

9. Procédé selon la revendication 1, **caractérisé en ce qu'**
on utilise un non-tissé Multiknit en tant que non-tissé volumineux.

10. Procédé selon la revendication 1, **caractérisé en ce qu'**
on utilise un non-tissé KSB en tant que non-tissé volumineux.

11. Procédé selon la revendication 1, **caractérisé en ce qu'**
on utilise un non-tissé par thermofusion Struto légèrement pré-consolidé en tant que non-tissé volumineux.

12. Procédé selon la revendication 1, **caractérisé en ce qu'**
on utilise des fibres de liaison à deux composants ayant un titre de fibres d'environ 10 dtex et d'une longueur de 60 mm en moyenne.

13. Procédé selon la revendication 1, **caractérisé en ce qu'**
on mélange au non-tissé volumineux une fraction de 50 à 60 % en poids, de préférence d'environ 55 % en poids de fibres PES ayant un titre de fibres d'environ 7 dtex et d'une longueur moyenne de 75 mm et une fraction de 25 à 35 % en poids, de préférence d'environ 30 % en poids de fibres PES ayant un titre de fibres d'environ 11 dtex et d'une longueur moyenne de 60 mm.

14. Procédé selon la revendication 1, **caractérisé en ce qu'**
on mélange au non-tissé volumineux une fraction de fibres fines ayant un titre d'environ 1,7 dtex et une fraction de fibres de liaison à deux composants ayant un titre de fibres d'environ 2,2 dtex.

15. Procédé selon la revendication 1, **caractérisé en ce qu'**
on mélange au non-tissé volumineux une fraction de 30 à 90 % en poids, de préférence d'environ 60 % en poids de fibres renaissance, en particulier de laines renaissance.

16. Procédé selon la revendication 1, **caractérisé en ce qu'**
on comprime les deux bandes respectivement le non-tissé à une température de 180 à 205°C, de préférence à 195°C environ lors de la consolidation supplémentaire, de la condensation, du lissage, du calibrage et du laminage.

17. Procédé selon la revendication 1, 2 ou 3, **caractérisé en ce qu'**
on comprime les deux bandes respectivement le non-tissé à une température de 180 à 205°C, de préférence à 195°C environ et depuis le côté revêtement à une température de 90 à 150°C, de préférence de 140°C environ lors de la consolidation supplémentaire, de la condensation, du lissage, du calibrage et du laminage.

18. Procédé selon la revendication 1, **caractérisé en ce que**,
pour le laminage, on applique une colle à chaud sous forme de grille couvrante à points de colle fins sur l'une des faces entrant en contact avec l'autre bande.

19. Procédé selon la revendication 1, **caractérisé en ce que**,
pour le laminage, on applique la colle sous la forme d'un non-tissé mince, constitué uniquement de fibres de liaison, sur un côté de la bande et on laisse pénétrer ce non-tissé de fibres de liaison entre les bandes à coller.

20. Procédé selon la revendication 1, **caractérisé en ce que**
la consolidation thermique supplémentaire, la condensation, le lissage, le calibrage et le laminage du non-tissé volumineux et de la matière de revêtement sont réalisés dans des découpes partiellement confectionnées des bandes.

21. Procédé selon la revendication 1, 2 ou 3, **caractérisé en ce que**
le laminage du non-tissé volumineux calibré et ayant subi une consolidation thermique supplémentaire avec la matière de revêtement est regroupé dans une gamme opératoire, homogène en termes de machine et de procédé, avec la fabrication du non-tissé volumineux ainsi qu'avec le calibrage, le lissage et la consolidation thermique supplémentaire du non-tissé.
